# FASCICULE DE BREVET EUROPEEN

(11) **EP 1 582 035 B1**
(45) Date de publication et mention de la délivrance du brevet: **27.08.2008**
(21) Numéro de dépôt: 04700699.4
(22) Date de dépôt: 08.01.2004
(51) Int. Cl.: H04L 12/28, H04L 29/06, G08C 19/28

(54) **Procédé de contrôle d'appareils au sein d'un réseau par une télécomande dediée et appareil mettant en oeuvre le procédé**
Verfahren zur Steuerung von Einrichtungen in einem Netzwerk durch festzugeordnete Fernsteuerung und Einrichtung zum Ausführen des Verfahrens
Method for controlling devices within a network by dedicated remote control and device for carryng out said method

(30) Priorité: 10.01.2003 FR 0300223
(43) Date de publication de la demande: 05.10.2005
(73) Titulaire: Thomson Licensing, 92100 Boulogne-Billancourt (FR)
(72) Inventeur: COSMAO, Michel, F-35340 Liffré (FR); HENRY, Jean-Baptiste, F-35520 MELESSE (FR); LUBBERS, Willem, F-35510 CESSON SEVIGNE (FR)
(74) Mandataire: Le Dantec, Claude
(86) Numéro de dépôt international: PCT/EP2004/050006
(87) Numéro de publication internationale: WO 2004/086680

(56) Documents cités:
- EP-A- 1 061 490
- US-A1- 2002 013 146
- US-A1- 2002 087 746
- US-B1- 6 466 971

## Description

L'invention concerne un procédé de gestion de ressources au sein d'un réseau de communication numérique, et l'appareil ainsi associées au procédé. L'invention s'applique plus particulièrement lorsque les ressources sont des moyens d'introduction de commandes utilisateur.

Un réseau de communication numérique comprend des appareils reliés entre eux par un bus de communication, par exemple le bus IEEE 1394, ou le bus IP utilisant des fils ou des ondes. Un réseau de communication numérique de type domestique comporte, par exemple, les appareils suivants : des terminaux permettant aux utilisateurs de mémoriser et de visualiser des documents audiovisuels, des récepteurs de télévision numérique (un décodeur par exemple) capable de recevoir des documents audiovisuels provenant d'un réseau de diffusion ou d'un réseau de type point par point (Internet par exemple), un dispositif de mémorisation des documents audiovisuels (un magnétoscope), un modem, etc. La liste des appareils n'est pas exhaustive. Les appareils peuvent être en plusieurs exemplaires au sein du réseau de communication numérique, par exemple on peut imaginer que, dans une habitation, chaque pièce dispose d'un terminal du même type. Chacun des appareils connectés dispose d'un moyen d'introduction d'une commande qui peut être un clavier, une souris, une télécommande, une manette de jeux (« joystick » en Anglais), un moyen de reconnaissance vocale utilisant un microphone, ou n'importe quel autre moyen permettant à un utilisateur d'agir sur un appareil électronique. Dans d'autres cas, les appareils se sont pas fournis avec une télécommande et ne peuvent être contrôlés que par les boutons en face avant.

Les appareils connectés à un réseau de type 1394, peuvent par exemple dialoguer ensemble selon le protocole HAVi en mettant à la disposition des autres une interface logicielle appelée « API » (de l'acronyme anglo-saxon « Application Programming Interface »). De cette manière, si un premier appareil a besoin de l'API d'un second appareil, ils peuvent dialoguer entre eux. Certains appareils peuvent être dotés d'appareils d'introduction dédiés. II peut être intéressant pour un utilisateur de contrôler un appareil du réseau à l'aide d'un appareil d'introduction dédié à un autre appareil.

La demande de brevet WO01/50219 déposée par VM LABS Inc et publié le 12 juillet 2001 décrit un système permettant de connecter plusieurs appareils d'introduction de commande utilisateurs tels que : une manette de jeux, une souris et un clavier. Tous les équipements décrits par ce système sont reliés à l'aide d'un bus 1394 à une unité centrale maître : un micro-ordinateur. Ce système est de ce fait centralisé et les appareils d'introduction de commande utilisateur sont en fait dédiés à l'unité centrale maître qui reçoit et traite les commandes émises par l'utilisateur. Une commande utilisateur élaborée sur un tel appareil d'introduction mais à destination d'une autre unité centrale doit transiter par l'unité centrale maître qui reste l'organe de contrôle de l'appareil d'introduction, bien que ce dernier ne soit pas l'unité centrale destinataire de la commande. Cette façon de communiquer n'est pas performante car l'appareil connecté à l'appareil d'introduction garde son statut de maître alors qu'il ne devrait être considéré que comme un appareil intermédiaire.

Une autre solution consisterait à considérer chaque moyen d'introduction de commande comme un appareil de type HAVi. Chaque appareil du réseau disposant de sa propre API de communication (appelé « Havlet »), l'appareil d'introduction de commande doit télécharger autant d'API qu'il y a d'appareils, ce qui rend complexe la communication et multiplie les échanges. Une telle solution implique qu'il faut préalablement à l'utilisation d'un appareil d'introduction que l'utilisateur indique systématiquement au réseau l'appareil à utiliser et donc, l'Havlet à charger.

Le document EP1061490 décrit un système de télécommande. Si un appareil veut se faire contrôler par un autre appareil, l'appareil télécharge son l'interface API dans l'autre appareil qui peut alors le contrôler.

Le document US 6,466,971 - HUMPLEMAN décrit dans son préambule que des appareils audiovisuels sont souvent contrôlés à partir

d'une même télécommande. De ce fait, les fabricants ont développés des unités de commande pour contrôler les appareils à partir d'une même interface. Si un appareil (2) veut se faire contrôler par un autre appareil (1), l'appareil (2) télécharge son API d'interface dans l'appareil (1) qui peut alors le contrôler. De telle sorte que, si plusieurs appareils (2, 2', 2") veulent se faire contrôler par l'appareil 1, c'est chaque fois une interface différente qui est chargée. La présente invention évite de télécharger des interfaces différentes et permet ainsi une plus grande standardisation.

Le document US 2002/087746 - LUDTKE décrit aussi que si un appareil (2) veut se faire contrôler par un autre appareil (1), l'appareil (2) télécharge son API d'interface dans l'appareil (1) qui peut alors le contrôler.

La présente invention permet aussi de mieux organiser le partage des ressources permettant à un utilisateur d'introduire une commande utilisateur, même si le moyen d'introduction est dédié à un appareil du réseau. La présente invention est définie par les revendications indépendantes 1 et 7.

De cette façon, chaque appareil du réseau peut communiquer avec un appareil disposant d'une télécommande et d'une interface de gestion, et peut configurer des touches de la télécommande pour son propre usage et non pour l'appareil dédié à cette télécommande.

Grace à l'interface de gestion du dispositif de contrôle, la présente invention permet à ce dispositif, typiquement une télécommande, de contrôler plusieurs appareils avec une interface générique. Pour cela ces appareils doivent s'enregistrer auprès de cette interface et contrairement à ce qui se passe dans le protocole HAVi standard et dans l'art antérieur précédemment cité, l'appareil à contrôler appelle l'interface de gestion et s'enregistre auprès de celle-ci. L'utilisateur programme des associations entre des moyens d'introduction de commande, typiquement des touches de la télécommande et une fonctionnalité d'un appareil choisi parmi une pluralité. Ainsi, le dispositif de commande devient générique à plusieurs appareils bien qu'au départ, il est dédié à un appareil déterminé. L'interface est appelée par les appareils qui veulent de cette manière être contrôlés.

Selon un perfectionnement, en réponse à une requête de configuration, le second appareil émet une information indiquant l'absence de disponibilité du ou des moyens d'introduction identifié(s) dans la requête. De cette manière, l'appareil sait que le moyen d'introduction de commande n'est pas disponible et que sa requête d'association n'a pas aboutie.

Selon un autre perfectionnement, en réponse à une requête de configuration, le second appareil émet une information indiquant la validation de l'association au niveau du second appareil du moyen d'introduction identifié dans la requête. De cette manière, l'appareil sait que le moyen d'introduction de commande est disponible et que sa requête d'association est enregistrée. Avantageusement, il sait aussi si d'autres premiers appareils sont associés au moyen d'introduction.

Selon un autre perfectionnement, lorsqu'un appareil est désactivé, les associations avec cet appareil sont effacées afin de permettre d'autres associations avec d'autres appareils pour ce moyen là.

Selon un autre perfectionnement, une requête de configuration associe plusieurs moyens d'introduction ayant une caractéristique commune à un premier appareil. De cette manière, on peut réaliser plusieurs associations avec plusieurs moyens d'introduction dans la même requête.

Selon un autre perfectionnement, le second appareil transmet la liste des moyens d'introduction disponible. L'utilisateur peut ainsi choisir parmi les moyens d'introduction ceux qu'il désire associer à l'appareil en cours de configuration. Selon un autre perfectionnement, le second appareil transmet la liste des associations programmées lors des précédentes étapes de configuration, ce qui permet d'informer un premier appareil de ce qui a déjà été configuré au niveau du second appareil, et lui permettre de vérifier que ses propres associations ont bien été prises en compte.

D'autres caractéristiques et avantages de la présente invention ressortiront de la description des exemples de réalisation qui vont suivre, pris à titre d'exemples non limitatifs, en référence aux figures annexées dans lesquelles :
La figure 1 représente un schéma d'un réseau de communication numérique selon un exemple de réalisation de l'invention.
La figure 2 représente l'architecture HAVi au niveau de l'appareil possédant une télécommande et la situation de l'API générique.

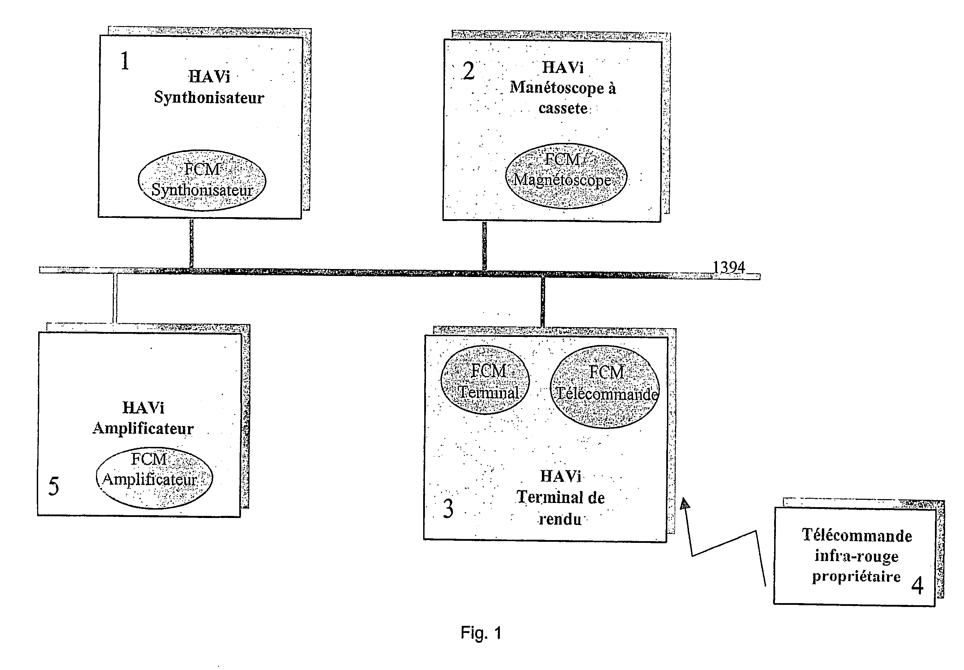

Un réseau de communication numérique selon un présent exemple de réalisation est décrit schématiquement à la figure 1, il est de façon préférentielle mais non limitative de type domestique. Les appareils sont reliés entre eux par un bus numérique utilisant par exemple le standard HAVI basé sur une architecture de type IEEE 1394. Il dispose donc d'une API de type « FCM », permettant à d'autres appareils de communiquer avec eux.

Le réseau domestique comprend par exemple les appareils suivants :
- un tuner 1 pour la réception d'émission provenant d'un réseau de diffusion. Cet appareil contient son API appelé « FCM Tuner »
- un magnétoscope ou « VCR » 2 pour l'enregistrement d'émission reçue par exemple du tuner 1. Cet appareil comprend aussi son API appelé « FCM VCR ».
- Un écran de télévision 3 pour la visualisation des émissions enregistrées dans le magnétoscope 2 ou reçue du tuner 1. Cet appareil dispose de son API appelé * « FCM Display » pour contrôler la visualisation des émissions et d'un autre API appelé « FCM Remote Control» pour l'interface de communication avec une télécommande dédiée à l'écran.
- Un amplificateur audio 4. pour la reproduction des signaux audio des émissions. Cet appareil contient aussi son API appelé « FCM Amplifier »

Des réseaux de communication numérique dotés d'autres protocoles de communication peuvent mettre en oeuvre la présente invention, citons par exemple le réseau IP reliant des appareils UPnP. Dans un tel réseau, les appareils vont chercher leur interface graphique via une page HTML qui sera affichée à l'aide d'un navigateur.

Supposons qu'un utilisateur choisisse de contrôler le Tuner, le magnétoscope et l'amplificateur avec la télécommande dédiée à l'écran de télévision. Par exemple, l'utilisateur décide que :
- les touches « P+ » et « P- » contrôlent le tuner et permettent de choisir le canal.
- les touches « V+ » et « V- » contrôlent l'amplificateur audio 4 et permettent d'augmenter ou diminuer le volume sonore.
- les touches « LECTURE » , « STOP », « PAUSE », « AVANCE RAPIDE» , « RETOUR RAPIDE. » contrôlent les fonctions bien connues d'un magnétoscope.

L'utilisateur va tout d'abord configurer les interfaces de communication de ces quatre appareils pour affecter à l'appareil correspondant un ou plusieurs boutons de la télécommande. Pour cela, sur chacun des trois appareils à commander, l'utilisateur lance un programme de configuration disponible sur chaque appareil. Dans un premier temps, le programme de configuration lance une requête sur le réseau de communication numérique pour rechercher si un API générique est disponible. En cas de réponse négative (ou pas de réponse du tout), le programme de configuration en informe l'utilisateur. Par contre, en cas de réponse positive, le programme de configuration reçoit de l'API la liste des moyens de commande, par exemple : des boutons, des commutateurs, ou même une liste de mots reconnus par un moteur de reconnaissance vocale, disponibles au niveau de la télécommande distante associée à l'API.

L'utilisateur peut alors choisir le moyen de commande à associer avec l'appareil sur lequel s'exécute le programme de configuration. La configuration s'effectue à l'aide d'une interface utilisateur, par exemple un écran LCD présent sur l'appareil à configurer et quelques touches en face avant de l'appareil, ou encore une interface graphique téléchargée sur un écran HAVI (havlet) permettant de dialoguer avec l'appareil à configurer. Le programme de configuration envoie à l'API générique des requêtes de configuration qui vont être expliquées par la suite. L'étape de configuration se termine lorsque toutes les associations entre les moyens de commande et l'appareil à commander ont été enregistrées au niveau de l'API générique.

l'API générique contenue dans l'appareil disposant d'une télécommande dédiée, en l'occurrence l'écran de télévision 3, peut être résidente (et enregistrée dans une mémoire non volatile) ou téléchargeable via un réseau. En utilisation, l'API contrôle les codes émis par la télécommande et en fonction des associations reçues détermine si la commande est destinée à l'écran de télévision 3 ou à l'un des trois autres appareils connectés au réseau. Dans ce dernier cas, l'APl transmet la commande à l'appareil associé.

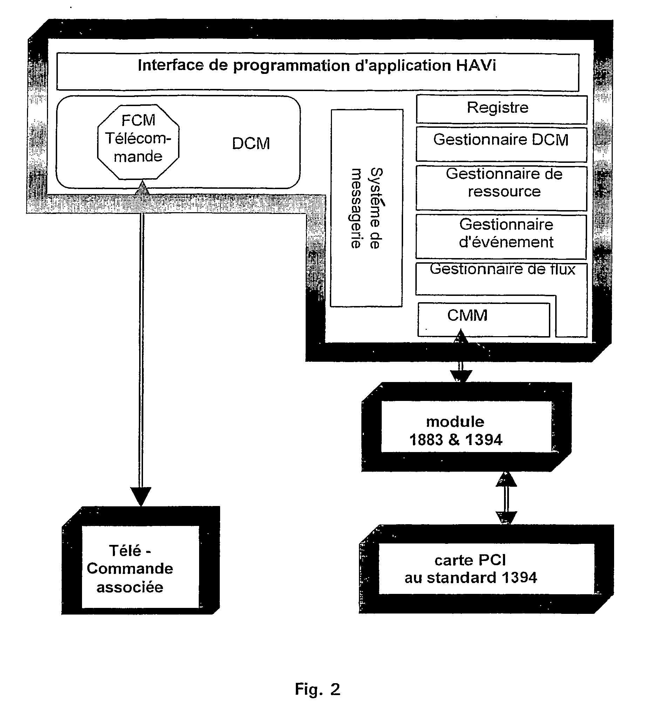

La figure 2 montre l'architecture HAVi au niveau de l'appareil possédant une télécommande et situe l'API générique au sein de la pile HAVi. L'API générique est un module déclaré en tant que FCM (acronyme de la désignation anglaise de « Functional Component Module » ) et disponible au niveau de l'appareil commandé de façon privilégiée par cette télécommande. Il est représenté par un pentagone dans la figure 2. Cet appareil étant déclaré à l'ensemble du réseau HAVi, propose l'API aux autres appareils connectés au réseau afin qu'ils en prennent connaissance. Ensuite, ces autres appareils peuvent au cours de l'étape de configuration décrite précédemment, envoyer à l'appareil disposant d'une télécommande dédiée, une ou plusieurs associations commande/appareil. La mémoire non volatile de chaque appareil associé à une télécommande dédiée enregistre l'association, la mémoire étant un circuit de type FLASH non volatile ou un disque dur par exemple.

Selon l'art antérieur, lorsqu'un premier appareil veut contrôler un second appareil, il doit télécharger un programme d'interface graphique appelé « Havlet » selon le standard HAVi ou appelé page de présentation HTML selon le standard UPnP de l'appareil disposant de l'API générique. Pour l'utilisateur, cela consiste dans un premier temps à télécharger une application graphique sur un écran (ce qui cache totalement ou en partie le document audio/video déjà présent à l'écran, et donc devient désagréable pour l'utilisateur). Puis dans un second temps, l'utilisateur navigue dans cette application via les touches de la télécommande associé à l'écran afin d'amener le focus de l'application sur le bouton graphique désiré et d'appuyer sur la touche OK de la télécommande. L'API générique évite cette étape fastidieuse pour l'utilisateur en simplifiant le mode opératoire lors de commande simple tel que modifier le volume d'un amplificateur via la touche V+ et V- ou zapper d'une chaîne à l'autre via les touches P+ P- et qui consomme de la place mémoire et du temps de communication. De façon particulièrement simple, l'API générique permet le contrôle de nombreuses fonctions simple, comme par exemple pour un magnétoscope, les commandes « lecture », « avance rapide », « enregistrement », ... Selon le présent exemple de réalisation de l'invention, le contrôle à distance ne nécessite pas d'interface graphique, mais uniquement l'envoi de message court identifiant la commande introduite par l'utilisateur sur une télécommande, et l'appareil associé à cette commande.

Nous allons maintenant décrire un exemple de réalisation de l'API générique. Selon le présent exemple de réalisation, l'API générique est un module logiciel exécutant diverses fonctions correspondant à des services accessibles à un autre appareil déclaré de type HAVi. Le tableau 1 ci-dessous présente les différentes fonctions accessibles dans l'API :

**TABLEAU 1**

| | |
|---|---|
| Numéro de la fonction | Nom de la fonction |
| 1 | CR : connexion |
| 2 | CR : déconnexion |
| 3 | CR : ressource supportée |
| 4 | CR : recherche des fonctionnalités |
| 5 | CR : réservation d'une touche particulière |
| 6 | CR : suppression de réservation d'une touche particulière |
| 7 | CR : réservation de toutes les touches |
| 8 | CR : suppression de toutes les réservations de touches |
| 9 | CR : réservation de groupe des touches de flèches |
| 10 | CR : suppression des réservations des touches de flèches |
| 11 | CR : réservation de groupe des touches décimales |
| 12 | CR : suppression des réservations des touches décimales |
| 13 | CR : réservation de groupe des touches colorées |
| 14 | CR : suppression des réservations des touches colorées |
| 15 | CR : Sortie |
| 16 | Evénement |

Les 16 fonctions sont décrites en annexe dans le langage standard HAVi. Cette annexe permet de réaliser l'invention dans le cadre d'une architecture de type HAVi, elle ne limite en rien la présente invention à cette architecture mais constitue un exemple de réalisation.

Les différentes fonctions vont maintenant être expliquées :
1- Contrôle télécommande : connexion
   Cette fonction permet de lancer une nouvelle connexion avec l'API générique. Un appareil désire ouvrir une nouvelle session, et émet une requête. En retour, la fonction délivre un unique identifiant appelé « long cid ». De cette manière, un canal de communication est ouvert entre un appareil HAVi qui souhaite se servir de la télécommande et l'API générique, l'identifiant permet d'identifier le canal parmi d'autres canaux. Un canal est établi, par exemple, pour le VCR, un autre pour le tuner, un troisième pour l'amplificateur. Si l'API n'est pas disponible, la fonction ne rend pas d'identifiant et n'ouvre pas de canal.
2- Contrôle télécommande : déconnexion
   Cette fonction permet de fermer la connexion avec l'API générique identifié par « long cid », paramètre obtenu suite à un connexion. Cette fonction permet de fermer le canal de communication ouvert lors d'une connexion. La fonction de déconnexion rend un message d'erreur si l'identifiant passé en tant que paramètre d'entrée n'est pas reconnu pour l'APl
3- Contrôle télécommande : ressource supportée (« IsSupported »
   Cette fonction permet de vérifier qu'un code de touche « KeyCode » est connu de l'API générique et est disponible. Par exemple, suite à une connexion, le Tuner va lancer cette fonction en indiquant comme paramètre d'entrée le code de la touche « P+ ». La fonction est booléenne : si le code est supporté par l'API et n'a pas été associé à un autre appareil HAVi, alors la fonction rend la valeur « Vrai » sinon, elle rend la valeur « Faux » . Cette fonction permet de déterminer finement l'état d'occupation des touches.
4- Contrôle télécommande : recherche des fonctionnalités
   Cette fonction permet d'obtenir un état global sous la forme d'une liste des codes de touches ou groupes de codes de touches : soit occupé (valeur de sortie : Faux) soit disponible (valeur de sortie Vrai). Des touches forment un groupe lorsque leurs fonctions sont associés, par exemple les quatre touches de flèches de direction, les deux touches P+ et P-, les dix touches du clavier décimal, etc. Grâce à cette fonction, un appareil HAVi connaît l'état de disponibilité de toutes les touches ou groupes de touches de la télécommande associée à l'API générique.
5- Contrôle télécommande : réservation de code
   Cette fonction permet de réserver un code de touche à un appareil HAVi qui le demande. Cette opération faite, le code de la touche n'est plus disponible. Par exemple, l'amplificateur envoie à l'API deux requêtes de réservation l'une pour le code V+ et l'autre V-, pour la commande du volume en plus ou en moins. La fonction de réservation renvoie un code d'erreur si le code de la touche a déjà été affecté à un appareil.
6- Contrôle télécommande : suppression de réservation
   Cette fonction permet de supprimer la réservation d'un code de touche à un appareil HAVi donné. Cette opération faite, le code de la touche est de nouveau disponible.
7- Contrôle télécommande : réservation de tous les codes
   Cette fonction permet de réserver tous les codes déclarés disponibles par l'API générique à l'appareil HAVi qui le demande. Cette fonction évite de les réserver individuellement par la fonction de réservation. Cette opération faite, plus aucun code de la touche n'est disponible. Les réservations individuelles qui avaient été exécutées avant cette fonction restent opérationnelles.
8- Contrôle télécommande : suppression de toutes les réservations
   Cette fonction est l'inverse de la précédente. Toutes les touches réservées à l'appareil qui émet cette requête sont disponibles. Cette fonction permet de libérer proprement les ressources offertes à l'API lorsque par exemple, on étend l'appareil ou on l'enlève du réseau de communication numérique.
9- 11- 13 Contrôle télécommande : réservation de groupe de code
   Cette fonction permet de réserver un groupe de codes à l'appareil HAVi qui le demande. Selon le présent exemple de réalisation, il existe trois groupes de touches : celui des flèches de direction (4 touches), c'est la fonction numéro 9. Celui des touches numériques (10 touches), c'est la fonction 11. Celui des touches colorées, c'est la fonction 13. Les touches colorées sont en nombre variable selon les télécommandes, elles permettent de définir des fonctions personnalisée telles que : accès direct à un menu déterminé, initialisation d'un appareil avec des paramètres (son, couleur, numéro de chaîne, ...), etc. Les groupes sont définies au niveau de l'API générique, les appareils HAVi peuvent en avoir connaissance en exécutant préalablement la fonction 4 : Recherche des fonctionnalités.
12 - 14 Contrôle télécommande : suppression de réservation de groupe
   Ces fonctions sont les inverses des fonctions précédentes 9, 11, 13. Tout le groupe de touches réservées à l'appareil qui émet cette requête est de nouveau disponible.
15- Contrôle télécommande : sortie
   Certaines télécommandes disposent d'une fonction vibreur (retour de force, ou tactile ; en langue anglo-saxonne «force Feedback » ) par exemple : une manette de jeu (en Anglais : "joystick") permettant un retour de force graduelle et palpable par l'utilisateur (exemple : la manette de jeu vibre plus ou moins fort dans un jeu de voiture lorsque le joueur sort de la route ou a un accident avec sa voiture)
   En fonction de la valeur du paramètre appelé « forceFeedbacklntensity » la télécommande vibre plus ou moins.
16- Contrôle télécommande : événement
   Contrairement aux précédentes, cette fonction n'est pas une requête d'un appareil HAVI vers l'API, mais l'émission par l'API d'un événement intervenu au niveau de la télécommande. Lorsqu'un utilisateur appuie sur une touche, l'API générique émet vers l'appareil associé à cette touche un message comprenant le code de la touche. Par exemple, l'appuie sur la touche PLAY de la télécommande associée à la télévision est traité par l'API générique qui envoie un message au VCR, ce message comportant le code de la touche « PLAY ».

Un exemple de scénario pour configurer l'API pour le dialogue avec un appareil HAVI donné tel qu'un décodeur est le suivant :
- Connexion (fonction 1)
- Recherche des fonctionnalités (fonction 4)
- Réservation du groupe des touches de direction (fonction 9)
- Réservation du code : la touche « ENTER » (fonction 5)

L'exécution de ces fonctions s'effectue lors de l'étape de configuration. Ensuite, l'utilisateur peut utiliser la télécommande pour contrôler l'appareil ainsi configuré. Au cours de l'étape d'utilisation, l'API générique émet des messages d'événement (voir paragraphe 16) pour transmettre aux appareil concernés les commandes de l'utilisateur.
A la fin de l'utilisation d'un appareil, par exemple au moment où l'utilisateur l'éteint, l'appareil envoie une requête de déconnexion (fonction 2) à l'API générique qui libère les touches associées à cet appareil, en effaçant dans la mémoire les références à cet appareil. De même, lorsque l'on débranche un appareil sans avertir le réseau, des mécanismes propres à l'architecture HAVi détectent la déconnexion et informent tous les appareils HAVi du réseau de cet événement. L'API générique recevant l'information qu'un appareil s'est déconnecté libère automatiquement les codes de touches affectées à cet appareil. De cette manière, ces touches ainsi libérées peuvent être attribuées à d'autres appareils.

L'API gère un tableau permettant de définir les associations entre chaque code de touches de la télécommande et chaque appareil HAVi qui a réservé le code. De cette manière, l'API peut immédiatement vérifier qu'un code est disponible et éventuellement l'attribuer à l'appareil qui le demande. Le tableau comprend autant de lignes que de moyens de commande, chaque ligne disposant d'un emplacement pour le code d'une touche par exemple et d'un autre pour l'identifiant de l'appareil effectuant la réservation.

Une amélioration consiste en ce que l'API puisse associer plusieurs appareils à un même code. Par exemple, le bouton « EXTINCTION » (ou « OFF ») de la télécommande peut arrêter plusieurs appareil HAVI à la fois. Ce perfectionnement modifie la fonction de réservation de code. Cette fonction ne rend plus alors un message d'erreur lorsque le code n'est pas disponible, elle rend un message indiquant que ce code est déjà attribué à au moins un appareil et effectue la réservation. Le tableau dans l'API est également modifié : le champ destiné à recevoir l'identifiant de l'appareil associée à la touche définie par le code peut comprendre plusieurs identifiants.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

### ANNEXE

### Remote Control Data Structures

| |
|---|
| KeyCode |

### Prototype

enum KeyCode {VK_1, VK_2, VK_3, ...}

### Description

Values for key code are the constants whose names begin with "VK_" defined in the org.havi.ui.event.HRcEvent and java.awt.event.KeyEvent classes.

| |
|---|
| KeyType |

### Prototype

enum KeyType {KEY_PRESSED, KEY_RELEASED}

### Description

Values for key type are the constants KEY_PRESSED and KEY_RELEASED defined in java.awt.event.KeyEvent.

### Remote Control APIs

| |
|---|
| RemoteControl::Connect |

### Prototype

Status RemoteControl:: Connect ( out long cid )

### Parameter

cid - identifier of the connection. It allows starting several connections from a single software component and also permits matching a response with a request.

### Description

This command allows a software element to open an asynchronous connection. Each *RemoteControl::Connect* allows the Remote Control FCM to manage a context per each connected client (connection identifier and function to call in order to send data to its client).

### Error code

- ERESOURCE_LIMIT: no more available cid, no more thread can be created

| |
|---|
| RemoteControl::Disconnect |

### Prototype

Status RemoteControl::Disconnect ( in long cid )

### Parameter

cid - identifier of the connection between the client application and the Remote Control FCM (issued by a client application from a previous *RemoteControl::Connect* call).

### Description

This function allows a software element to close a RemoteControl connection.

### Error code

- RemoteControl::ECONNECTION: cid doesn't exist
- RemoteControl::ECLIENT: the client is not allowed to access this connection

### Remarks

Sending a RemoteControl::Disconnect message will abort any other action being performed. Once a client called RemoteControl::Disconnect, the cid is no longer available.

| |
|---|
| RemoteControl:: IsSupported |

### Prototype

```
  Status RemoteControl:: IsSupported (
                  in long cid,
                  in KeyCode keyCode,
                  out boolean keySupported)
```

### Parameter

cid - identifier of the connection between the client application and the Remote Control FCM (issued by a client application from a previous *RemoteControl::Connect* call).
keyCode - key code requested
keySupported - identifies whether the key is supported by the remote control device

### Description

This API enables an application to know if the code specified by the key code is supported by the remote control

### Error code

- RemoteControl::ECONNECTION: cid doesn't exist
- RemoteControl::ECLIENT: the client is not allowed to access this connection

| |
|---|
| RemoteControl::GetCapabilities |

### Prototype

```
  Status RemoteControl:: GetCapabilities (
                 in long cid,
                 out boolean forceFeedBackAvailable,
                 out boolean allKeysAvailable,
                 out boolean allArrowKeysAvailable,
                 out boolean allNumericKeysAvailable,
                 out boolean allColourKeysAvailable)
```

### Parameter

cid - identifier of the connection between the client application and the Remote Control FCM (issued by a client application from a previous *RemoteControl::Connect* call).
forceFeedBackAvailable - identifies whether force feedback is available.
AllKeysAvailable - identifies whether all keys are available
allArrowKeysAvailable - identifies whether all arrow keys are available (VK_LEFT, VK_RIGHT, VK_UP, VK_DOWN).
allNumericKeysAvailable - identifies whether all numeric keys are available (VK_0, VK_1, VK_2, VK_3, VK_4, VK_5, VK_6, VK_7, VK_8, VK_9).
allColourKeysAvailable - identifies whether all color keys are available (VK_COLORED_KEY_0, VK_COLORED_KEY_1, VK_COLORED_KEY_2, VK_COLORED_KEY_3).

| |
|---|
| RemoteControl:: AddKey |

### Prototype

```
 Status RemoteControl:: AddKey (
                 in long cid,
                 in KeyCode keyCode,
                 out boolean keyAdded)
```

### Parameter

cid - identifier of the connection between the client application and the Remote Control FCM (issued by a client application from a previous *RemoteControl::Connect* call).
keyCode - key code requested
keyAdded - identifies whether the key is added by the remote control device

### Description

This API enables an application to add it a key with the code specified by the key code

### Error code

- RemoteControl::ECONNECTION: cid doesn't exist
- RemoteControl::ECLIENT: the client is not allowed to access this connection

| |
|---|
| RemoteControl:: RemoveKey |

### Prototype

```
 Status RemoteControl:: RemoveKey (
                 in long cid,
                 in KeyCode keyCode,
                 out boolean keyRemoved)
```

### Parameter

cid - identifier of the connection between the client application and the Remote Control FCM (issued by a client application from a previous *RemoteControl::Connect* call).
keyCode - key code requested
keyRemoved - identifies whether the key is removed by the remote control device

### Description

This API enables an application to remove it a key with the code specified by the key code

### Error code

- RemoteControl::ECONNECTION: cid doesn't exist
- RemoteControl:ECLIENT: the client is not allowed to access this connection

| |
|---|
| RemoteControl:: AddAllKeys |

### Prototype

```
 Status RemoteControl:: AddAllKeys (
                 in long cid,
                 out boolean allKeysAdded)
```

### Parameter

cid - identifier of the connection between the client application and the Remote Control FCM (issued by a client application from a previous *RemoteControl::Connect* call).
allKeyAdded - identifies whether all keys are added by the remote control device

### Description

This API enables an application to add it all keys.

### Error code

- RemoteControl::ECONNECTION: cid doesn't exist
- RemoteControl::ECLIENT: the client is not allowed to access this connection

| |
|---|
| RemoteControl:: RemoveAllKeys |

### Prototype

```
 Status RemoteControl:: RemoveAllKeys (
                 in long cid,
                 out boolean allKeysRemoved)
```

### Parameter

cid - identifier of the connection between the client application and the Remote Control FCM (issued by a client application from a previous *RemoteControl::Connect* call).
allKeyRemoved - identifies whether all keys are added by the remote control device

### Description

This API enables an application to remove it all keys.

### Error code

- RemoteControl::ECONNECTION: cid doesn't exist
- RemoteControl::ECLIENT: the client is not allowed to access this connection

| |
|---|
| RemoteControl:: AddAllArrowKeys |

### Prototype

```
  Status RemoteControl:: AddAllArrowKeys (
                 in long cid,
                 out boolean allArrowKeysAdded)
```

### Parameter

cid - identifier of the connection between the client application and the Remote Control FCM (issued by a client application from a previous *RemoteControl::Connect* call).
allArrowKeysAdded - identifies whether arrow keys are added by the remote control device

### Description

This API enables an application to add it all arrow keys (VK_LEFT, VK_RIGHT, VK_UP, VK_DOWN).

### Error code

- RemoteControl::ECONNECTION: cid doesn't exist
- RemoteControl::ECLIENT: the client is not allowed to access this connection

| |
|---|
| RemoteControl:: RemoveAllArrowKeys |

### Prototype

```
  Status RemoteControl:: RemoveAllArrowKeys (
                 in long cid,
                 out boolean allArrowKeysRemoved)
```

### Parameter

cid - identifier of the connection between the client application and the Remote Control FCM (issued by a client application from a previous *RemoteContro*/*::Connect* call).
allArrowKeysRemoved - identifies whether all keys are added by the remote control device

### Description

This API enables an application to remove it all arrow keys (VK_LEFT, VK_RIGHT, VK_UP, VK_DOWN).

### Error code

- RemoteControl::ECONNECTION: cid doesn't exist
- RemoteControl::ECLIENT: the client is not allowed to access this connection

| |
|---|
| RemoteControl:: AddAllNumericKeys |

### Prototype

```
 Status RemoteControl:: AddAllNumericKeys (
                 in long cid,
                 out boolean allNumericKeysAdded)
```

### Parameter

cid - identifier of the connection between the client application and the Remote Control FCM (issued by a client application from a previous *RemtoeControl::Connect* call).
allNumericKeysAdded - identifies whether all numeric keys are added by the remote control device

### Description

This API enables an application to add it all numeric keys (VK_0, VK_1, VK_2, VK_3, VK_4, VK_5, VK_6, VK_7, VK_8, VK_9).

### Error code

- RemoteControl::ECONNECTION: cid doesn't exist
- RemoteControl::ECLIENT: the client is not allowed to access this connection

| |
|---|
| RemoteControl:: RemoveAllNumericKeys |

### Prototype

```
 Status RemoteControl:: RemoveAllNumericKeys (
                 in long cid,
                 out boolean allNumericKeysRemoved)
```

### Parameter

cid - identifier of the connection between the client application and the Remote Control FCM (issued by a client application from a previous *RemoteControl::Connect* call).
allNumericKeysRemoved - identifies whether numeric keys are added by the remote control device

### Description

This API enables an application to remove it all numeric keys (VK_0, VK_1, VK_2, VK_3, VK_4, VK_5, VK_6, VK_7, VK_8, VK_9).

### Error code

- RemoteControl::ECONNECTION: cid doesn't exist
- RemoteControl::ECLIENT: the client is not allowed to access this connection

| |
|---|
| RemoteControl:: AddAllColorKeys |

### Prototype

```
 Status RemoteControl:: AddAllColorKeys (
                 in long cid,
                 out boolean allColorKeysAdded)
```

### Parameter

cid - identifier of the connection between the client application and the Remote Control FCM (issued by a client application from a previous *RemoteControl::Connect* call).
allColorKeyAdded - identifies whether all color keys are added by the remote control device

### Description

This API enables an application to add it all color keys (VK_COLORED_KEY_0, VK_COLORED_KEY_1, VK_COLORED_KEY_2, VK_COLORED_KEY_3).

### Error code

- RemoteControl::ECONNECTION: cid doesn't exist
- RemoteControl::ECLIENT: the client is not allowed to access this connection

| |
|---|
| RemoteControl:: RemoveAllColorKeys |

### Prototype

```
 Status RemoteControl:: RemoveAllColorKeys (
                 in long cid,
                 out boolean allColorKeysRemoved)
```

### Parameter

cid - identifier of the connection between the client application and the Remote Control FCM (issued by a client application from a previous *RemoteControl::Connect* call).
allColorKeyRemoved - identifies whether all color keys are added by the remote control device

### Description

This API enables an application to remove it all color keys (VK_COLORED_KEY_0, VK_COLORED_KEY_1, VK_COLORED_KEY_2, VK_COLORED_KEY_3).

### Error code

- RemoteControl::ECONNECTION: cid doesn't exist
- RemoteControl::ECLIENT: the client is not allowed to access this connection

| |
|---|
| RemoteControl:: ForceFeedbackEvent |

### Prototype

```
 Status RemoteControl:: ForceFeedbackEvent (
                 in long cid,
                 in octet forceFeedbackIntensity)
```

### Parameter

cid - identifier of the connection between the client application and the Remote Control FCM (issued by a client application from a previous *RemoteControl::Connect* call).
forceFeedbackIntensity - intensity of the force feedback (from 0 to 127)

### Description

This API enables an application to send a force feedback event to the remote control .

### Error code

- RemoteControt::ECONNECTION: cid doesn't exist
- RemoteControl::ECLIENT: the client is not allowed to access this connection

| |
|---|
| <Client>::RCEvent |

### Prototype

```
     Status <Client>::RCEvent (
                in long cid,
                in KeyCode keyCode,
                in KeyType keyType)
```

### Parameter

cid - identifier of the connection between the client application and the Remote Control FCM (issued by a client application from a previous *RemoteControl::Connect* call).
keyCode - informs the software element client with the identifier of the key pressed (key code).
keyType - - informs the software element client with the key pressed event type (KEY_PRESSED or KEY_RELEASED)

### Description

This command causes the server (File Manager FCM) to transfer a copy of the file, specified in the pathname. The status and contents of the file at the server site shall be unaffected.

### Error code

- EINVALID_PARAMETER: cid is unknown for the client

## Revendications

1. Procédé de contrôle de plusieurs premiers appareils (1, 2, 5) reliés par un réseau de communication à un second appareil (3) associé à un dispositif de contrôle (4) qui lui est dédiée, le dispositif de contrôle (4) comportant des moyens d'introduction de commande ; **caractérisé en ce qu'**il comporte :
- une étape de réception au niveau de chaque premier appareil (1 ; 2 ; 5) de la liste des moyens d'introduction du dispositif de contrôle (4) associé au second appareil,
- une étape de lancement au niveau de chaque premier appareil (1 ; 2 ; 5) à contrôler d'une étape de configuration d'au moins une association entre une fonction d'un premier appareil et un moyen d'introduction de la liste précédemment reçue, l'association étant transmise par une requête d'un premier appareil (1, 2, 5) à une interface de gestion du dispositif de contrôle (4) disponible au sein du second appareil (3),
- lorsqu'un des moyens d'introduction du dispositif de contrôle (4) est activé : une étape d'émission par le second appareil (3) vers le premier appareil (1 ; 2 ; 5) associé à ce moyen d'introduction d'une information de contrôle identifiant le moyen activé pour l'exécution de la fonction au niveau du premier appareil.

2. Procédé de contrôle selon la revendication 1 ; **caractérisé en ce qu'**en réponse à une requête de configuration, il comporte une étape d'émission d'une information indiquant l'absence de disponibilité au niveau du second appareil (3) du moyen d'introduction identifié dans la requête.

3. Procédé de contrôle selon la revendication 1 ; **caractérisé en ce qu'**en réponse à une requête de configuration, il comporte une étape d'émission d'une information indiquant la validation de l'association au niveau du second appareil (3) du moyen d'introduction identifié dans la requête, et l'indication d'autres premiers appareils (1, 2, 5) associés à ce moyen.

4. Procédé de contrôle selon l'une des revendications 1 à 3 ; **caractérisé en ce qu'**il comporte une étape d'effacement de ou des association entre un premier appareil (1 ; 2 ; 5) et un ou plusieurs moyens d'introduction lorsque ledit premier appareil est désactivé.

5. Procédé de contrôle selon l'une quelconque des revendications précédentes ; **caractérisé en ce qu'**une requête de configuration associe plusieurs moyens d'introduction ayant une caractéristique commune à un premier appareil (1 ; 2 ; 5).

6. Procédé de contrôle selon l'une quelconque des revendications précédentes ; **caractérisé en ce qu'**en réponse à une requête d'état émise par un premier appareil (1 ; 2 ; 5), il comporte une étape d'émission par le second appareil (3) de la liste des associations programmées lors des précédentes étapes de configurations.

7. Appareil (3) possédant un moyen de connexion avec un réseau de communication et recevant des signaux d'un dispositif de contrôle (4) dédié doté de moyens d'introduction de commandes tels que des touches ; **caractérisé en ce que** le moyen de connexion émet à un autre appareil (1 ; 2 ; 5) connecté au réseau une liste des moyens d'introduction du dispositif de contrôle dédié (4) et **en ce qu'**il comporte un moyen d'association activé par cet autre appareil (1 ; 2 ; 5) connecté au réseau, ledit moyen enregistrant en mémoire des données d'association entre un moyen d'introduction de la liste et l'identifiant de cet autre appareil, le moyen de connexion émettant un bloc de données lors de l'introduction d'une commande sur le dispositif de contrôle dédié (4), ledit bloc de données comportant un identificateur de la commande introduite et étant destiné à l'appareil associé à cette commande.

8. Appareil (3) selon la revendication 7 ; **caractérisé en ce qu'**il comporte un moyen de réception par le réseau de communication de données d'associations à mémoriser.

9. Appareil (3) selon la revendication 8 ; **caractérisé en ce qu'**il comporte un moyen de corrélation entre une donnée d'associations reçue d'un appareil identifié et les données déjà mémorisées, et un moyen d'émission d'un message de non disponibilité lorsque le moyen d'introduction indiqué dans la donnée reçue est déjà associé à un autre appareil (1 ; 2 ; 5).

10. Appareil (3) selon la revendication 8 ; **caractérisé en ce qu'**il comporte un moyen de corrélation entre une donnée d'associations reçue d'un appareil identifié et les données déjà mémorisées, et un moyen d'émission d'un message de disponibilité lorsque le moyen d'introduction indiqué dans la donnée reçue n'est pas associé à un autre appareil (1 ; 2 ; 5), la donnée d'association est alors écrite en mémoire.

11. Appareil (3) selon l'une quelconque des revendications 8 à 10 ; **caractérisé en ce qu'**il comporte un moyen de réception d'un signal de désactivation d'un autre appareil relié au réseau déclenchant l'effacement des données d'associations associées à cet autre appareil (1 ; 2 ; 5).

12. Appareil (3) selon l'une quelconque des revendications 8 à 11 ; **caractérisé en ce qu'**il comporte un moyen d'émission des données d'associations stockées en mémoire activé à la suite d'une requête d'un autre appareil (1 ; 2 ; 5) connecté au réseau.

## Claims

1. Method of controlling a number of first devices (1, 2, 5) linked by a communication network to a second device (3) associated with a control device (4) which is dedicated to it, the control device (4) comprising command input means; **characterized in that** it comprises:
- a step for transmitting on each first device (1 ; 2 ; 5) of the list of input means of the control device (4) associated with the second device,
- a step for starting, on each first device (1, 2, 5) to be controlled, a step for configuring at least one association between a function of a first device and an input means of the previously received list, the association being transmitted by a request from a first device (1, 2, 5) to a management interface of the control device (4) available in the second device (3),
- when one of the input means of the control device (4) is activated: a step for transmission by the second device (3) to the first device (1, 2, 5) associated with this means of inputting control information identifying the means activated to execute the function on the first device.

2. Control method according to Claim 1; **characterized in that,** in response to a configuration request, it includes a step for sending information indicating the absence of availability on the second device (3) of the input means identified in the request.

3. Control method according to Claim 1; **characterized in that,** in response to a configuration request, it includes a step for sending information indicating the validation of the association on the second device (3) of the input means identified in the request, and the indication of other first devices (1, 2, 5) associated with this means.

4. Control method according to one of Claims 1 to 3; **characterized in that** it includes a step for deleting association(s) between a first device (1, 2, 5) and one or more input means when said first device is deactivated.

5. Control method according to any one of the preceding claims; **characterized in that** a configuration request associates a number of input means having a common characteristic with a first device (1 ; 2 ; 5).

6. Control method according to any one of the preceding claims; **characterized in that,** in response to a status request sent by a first device (1 ; 2 ; 5), it includes a step for transmission by the second device (3) of the list of associations programmed in the preceding configuration steps.

7. Device (3) having a means of connection with a communication network and receiving signals from a dedicated control device (4) provided with command input means such as keys; **characterized in that** said means of connection transmits to another device (1 ; 2 ; 5) connected to the network a list of introduction means of the dedicated remote control (4), and it includes an association means activated by this another device ( 1 ; 2 ; 5) connected to the network, said means storing in memory association data between an input means of the list and the identifier of this other device, the means of connection transmitting a block of data when a command is input on the dedicated control device (4), said data block including an identifier of the command input and being intended for the device associated with this command.

8. Device (3) according to Claim 7; **characterized in that** it includes a means of reception via the communication network of association data to be stored.

9. Device (3) according to Claim 8; **characterized in that** it includes a means of correlation between association data received from an identified device and data already stored, and a means of transmitting a non-availability message when the input means indicated in the received data is already associated with other device (1 ; 2 ; 5).

10. Device (3) according to Claim 8; **characterized in that** it includes a means of correlation between association data received from an identified device and the data already stored, and a means of transmitting an availability message when the input means indicated in the received data is not associated with another device (1 ; 2 ; 5), the association data then being written in memory.

11. Device (3) according to any one of Claims 8 to 10; **characterized in that** it includes a means of receiving a deactivation signal from another device linked to the network triggering the deletion of the association data associated with this other device (1 ; 2 ; 5).

12. Device (3) according to any one of Claims 8 to 11; **characterized in that** it includes a means of transmitting association data stored in memory activated following a request from another device (1 ; 2 ; 5) connected to the network.

## Patentansprüche

1. Verfahren zur Kontrolle mehrerer Einrichtungen (1, 2, 5), die über ein Netzwerk mit einer zweiten Einrichtung (3) verbunden sind, die zu einer ihr fest zugeordneten Kontrollvorrichtung (4) zugeordnet ist, wobei die Kontrollvorrichtung (4) Befehlseingabemittel umfasst, **dadurch gekennzeichnet, dass** es folgende Schritte aufweist:
- einen Schritt des Empfangens der Liste der Eingabemittel der zu der zweiten Einrichtung zugeordneten Kontrollvorrichtung (4) an jeder ersten Einrichtung (1; 2; 5),
- einen Schritt des Startens, an jeder ersten zu kontrollierenden Einrichtung (1; 2; 5), eines Schritts des Konfigurierens mindestens einer Zuordnung einer Funktion einer ersten Einrichtung zu einem Eingabemittel aus der zuvor empfangenen Liste, wobei die Zuordnung durch eine Anforderung einer ersten Einrichtung (1, 2, 5) hin zu einer Managementschnittstelle der Kontrollvorrichtung (4), die in der zweiten Einrichtung (3) verfügbar ist, übermittelt wird,
- wenn eines der Eingabemittel der Kontrollvorrichtung (4) aktiviert ist: einen Schritt des Sendens, von der zweiten Einrichtung (3) zu der ersten, zu diesem Eingabemittel zugeordneten Einrichtung (1; 2; 5), einer Kontrollinformation, die das zur Ausführung der Funktion an der ersten Einrichtung aktivierte Mittel identifiziert.

2. Kontrollverfahren nach Anspruch 1, **dadurch gekennzeichnet, dass** es auf eine Konfigurationsanforderung hin einen Schritt des Sendens einer Information aufweist, die anzeigt, dass das in der Anforderung identifizierte Eingabemittel an der zweiten Einrichtung (3) nicht verfügbar ist.

3. Kontrollverfahren nach Anspruch 1, **dadurch gekennzeichnet, dass** es auf eine Konfigurationsanforderung hin einen Schritt des Sendens einer Information aufweist, die die Validierung der Zuordnung des in der Anforderung identifizierten Eingabemittels an der zweiten Einrichtung (3) und die Angabe weitere erster, zu diesem Mittel zugeordneter Einrichtungen (1, 2, 5) anzeigt.

4. Kontrollverfahren nach einem der Ansprüche 1 bis 3, **dadurch gekennzeichnet, dass** es einen Schritt des Löschens der Zuordnung(en) einer ersten Einrichtung (1; 2; 5) zu einem oder mehreren Eingabemitteln aufweist, wenn die erste Einrichtung deaktiviert ist.

5. Kontrollverfahren nach einem der vorhergehenden Ansprüche, **dadurch gekennzeichnet, dass** durch eine Konfigurationsanforderung mehrere Eingabemittel mit einem gemeinsamen Merkmal zu einer ersten Einrichtung (1; 2; 5) zugeordnet werden.

6. Kontrollverfahren nach einem der vorhergehenden Ansprüche, **dadurch gekennzeichnet, dass** auf eine von einer ersten Einrichtung (1; 2; 5) ausgesendete Zustandsanfrage hin es einen Schritt des Sendens, durch die zweite Einrichtung (3), der Liste der bei den vorigen Konfigurationsschritten programmierten Zuordnungen aufweist.

7. Einrichtung (3), die ein Mittel zum Anschließen an ein Kommunikationsnetzwerk besitzt und Signale von einer fest zugeordneten Kontrollvorrichtung (4), die mit Befehlseingabemitteln wie Tasten versehen ist, empfängt, **dadurch gekennzeichnet, dass** das Anschlussmittel an eine weitere, an das Netzwerk angeschlossene Einrichtung (1; 2; 5) eine Liste der Eingabemittel der fest zugeordneten Kontrollvorrichtung (4) sendet und dass sie ein Zuordnungsmittel aufweist, das durch diese weitere, an das Netzwerk angeschlossene Einrichtung (1; 2; 5) aktiviert wird, wobei das Mittel Daten zur Zuordnung eines Eingabemittels aus der Liste zu der Kennung dieser weiteren Einrichtung speichert, wobei das Anschlussmittel bei der Eingabe eines Befehls an der fest zugeordneten Kontrollvorrichtung (4) einen Datenblock sendet, wobei der Datenblock eine Kennung des eingegebenen Befehls umfasst und für die zu diesem Befehl zugeordnete Einrichtung bestimmt ist.

8. Einrichtung (3) nach Anspruch 7, **dadurch gekennzeichnet, dass** sie ein Mittel zum Empfangen von zu speichernden Zuordnungsdaten durch das Kommunikationsnetzwerk aufweist.

9. Einrichtung (3) nach Anspruch 8, **dadurch gekennzeichnet, dass** sie ein Mittel zum Korrelieren eines aus einer identifizierten Einrichtung empfangenen Zuordnungsdatums mit den bereits gespeicherten Daten und ein Mittel zum Senden einer Nichtverfügbarkeitsmeldung, wenn das in dem empfangenen Datum angegebene Eingabemittel bereits zu einer weiteren Einrichtung (1; 2; 5) zugeordnet ist, aufweist.

10. Einrichtung (3) nach Anspruch 8, **dadurch gekennzeichnet, dass** sie ein Mittel zum Korrelieren eines aus einer identifizierten Einrichtung empfangenen Zuordnungsdatums mit den bereits gespeicherten Daten und ein Mittel zum Senden einer Verfügbarkeitsmeldung, wenn das in dem empfangenen Datum angegebene Eingabemittel nicht zu einer weiteren Einrichtung (1; 2; 5) zugeordnet ist, aufweist, wobei das Zuordnungsdatum dann gespeichert wird.

11. Einrichtung (3) nach einem der Ansprüche 8 bis 10, **dadurch gekennzeichnet, dass** sie ein Mittel zum Empfangen eines Signals zum Deaktivieren einer weiteren, mit dem Netzwerk verbundenen Einrichtung, welches das Löschen der zu dieser weiteren Einrichtung (1; 2; 5) zugeordneten Daten auslöst, aufweist.

12. Einrichtung (3) nach einem der Ansprüche 8 bis 11, **dadurch gekennzeichnet, dass** sie ein Mittel zum Senden der gespeicherten Zuordnungsdaten, das infolge einer Anforderung einer weiteren, an das Netzwerk angeschlossenen Einrichtung (1; 2; 5) aktiviert wird, aufweist.
